# EUROPEAN PATENT APPLICATION

(11) **EP 2 819 478 A1**
(43) Date of publication of application: **31.12.2014**
(21) Application number: 14305251.2
(22) Date of filing: 24.02.2014
(51) Int. Cl.: H04W 72/12, H04L 5/00

(54) **A method for allocating radio resources, and a base station and a user terminal therefor**

(30) Priority: 27.06.2013 EP 13305901
(71) Applicant: ALCATEL LUCENT, 92100 Boulogne-Billancourt (FR)
(72) Inventor: Braun, Volker, 70435 Stuttgart (DE); Cesar, Bozo, 70435 Stuttgart (DE)
(74) Representative: Kleinbub, Oliver

(57) **Abstract**

The invention concerns method for allocating radio resources in a multi-carrier transmission system, wherein radio resources are preallocated to at least one shared channel, a group of at least one user terminal (UE11, UE12) is assigned to said at least one shared channel, information defining said at least one shared channel is transmitted to the group of the at least one user terminal (UE11, UE12), and dynamic scheduling is used for allocating radio resources of said at least one shared channel to at least one user terminal of said group of the at least one user terminal (UE11, UE12) for data transmission from and to a base station (BS1), and a base station and a user terminal therefor.

## Description

### Field of the invention

The invention relates to a method for allocating radio resources in a multi-carrier transmission system, and a base station and a user terminal adapted to perform said method.

### Background

Machine to machine communication (MMC) is expected to create a large amount of traffic volume in future wireless networks, in particular involving small payload packets. An issue with small payload packets in current wireless broadband systems, e.g. such as Long Term Evolution (LTE), is that the signaling overhead is large compared to the payload, thus making the transmission of small payload packets very inefficient.

Future wireless broadband systems will demand efficient MMC techniques. The MMC devices are typically low-cost devices and their functionality may be reduced compared to a conventional user equipment (smart phone, tablet, etc.). Also, there is a need to minimize the power consumption by adequate design of the air interface.

MMC devices communicate via a multi-carrier transmission system, e.g. Orthogonal Frequency Division Multiplexing (OFDM), Single Carrier Frequency Division Multiple Access (SC-FDMA), Filter Bank Multicarrier (FBMC) or the like with resource allocation in transmission time intervals and frequency resources, e.g. physical resource blocks in LTE, or a subset or bundle thereof. Low-cost MMC devices may use only part of the available band, e.g. the inner xMHz band of the LTE frequency band. The scheduling of the resources may be with or without contention. Fully dynamic scheduling is often realized.

In LTE this involves a fully dynamic assignment of radio resources by means of so-called L1/L2 control signaling, i.e. uplink (UL) or downlink (DL) scheduling grants transmitted in Downlink Control Information (DCI) on a Physical Downlink Control Channel (PDCCH). This method creates a large signaling overhead and causes significant battery consumption in the MMC device for the blind searches.

The conventional solution has two stages:
In a first stage, the receiver decodes the L1/L2 control information, using a first set of pilot symbols, typically involving non-precoded pilot symbols, and performs a user-specific Cyclic Redundancy Check (CRC). If CRC is passed, the receiver continues with the second stage.
In a second stage, the receiver performs the data detection and decoding using the parameters extracted from the L1/L2 control channel, aided by channel estimation using a second set of pilot symbols, possibly involving precoded pilot symbols.

With conventional solutions the L1/L2 control signaling involving user-specific CRC and the actual data transmission use a disjunct set of radio resources:
In LTE Release 8, the control signaling on a PDCCH is separated from the data by means of Time Division Multiplexing (TDM).
In LTE Release 10, the control signaling on an enhanced PDCCH (ePDCCH) is separated from the data by means of Frequency Division Multiplexing (FDM).

This implies that the first set of pilot symbols can in general not be used for aiding the decoding of the actual data, since the radio resources for control and data are too far apart from each other.

### Summary

It is an object of the invention to reduce signaling overhead for establishing a communication link between a base station and a user terminal in a machine to machine communication scenario.

According to one embodiment, a method for allocating radio resources in a multi-carrier transmission system is proposed. The multi-carrier system is e.g. an OFDM, SC-FDMA or FBMC system with resource allocation in transmission time intervals and frequency resources. These systems are examples of systems providing shared channels to which a group of at least one user terminal may be assigned. Within one shared channel, different user terminals may have access to radio resources according to a dynamic scheduling algorithm or the like.

In one step, at least one shared channel is preallocated. The shared channel is e.g. preallocated to machine to machine communication. The preallocation may be permanently or on a semi-static basis. Semi-static preallocation means that the preallocation of channels is done when setting up the network and may be changed from time to time, but can be considered constant during the time needed for a machine to machine communication device to transmit or receive its data. Further, a group of at least one user terminal is assigned to the at least one preallocated shared channel, and information defining the at least one preallocated shared channel is transmitted to the group of the at least one user terminal. In another step, radio resources from the at least one preallocated shared channel assigned to the group of the at least one user terminal are assigned by dynamic scheduling to a user terminal of the group of the at least one user terminal for data transmission between a base station and the user terminal. In general, more than one group of at least one user terminal is created, wherein the user terminals in one group are related to each other by at least one shared characteristic or parameter. This has the advantage to reduce overhead beforehand of each data transmission. This advantage is realized by the preallocation of a shared channel and assigning the group of user terminals to the respective preallocated shared channel. Signaling overhead is drastically reduced even if in some embodiments signaling overhead is needed for preallocation of the shared channel and assigning a group of at least one user terminal to a preallocated shared channel. After the assignment is done, this group of at least one user terminal is set up to use the at least one preallocated shared channel as a radio resource. If one user terminal within a group of at least one user terminal has data to transmit, the radio resource of the preallocated shared channel is allocated to the user terminal prepared to transmit data by dynamic scheduling. Thus, as said at least one shared channel is preallocated and already assigned to the group of the at least one user terminal, dynamic scheduling addresses only said at least one shared channel in correspondence with the group of the at least one user terminal. As this is a subset of the whole transmission system, the dynamic scheduling is only done with regard to this subset of the system and is thus drastically simplified. As a consequence, the signaling overhead is reduced significantly. This optimizes the relation between overhead and data in the transmission system, especially in case of machine to machine communication with low payloads.

In one embodiment, a signaling of a preallocated shared channel is realized by user specific Radio Resource Control (RRC) signaling. This allows a flexible preallocation and thus enables a flexible transmission system.

The object of the invention is thus achieved by a method for allocating radio resources in a multi-carrier transmission system, wherein
- radio resources are preallocated to at least one shared channel,
- a group of at least one user terminal is assigned to said at least one shared channel,
- information defining said at least one shared channel is transmitted to the group of the at least one user terminal,
- and dynamic scheduling is used for allocating radio resources of said at least one shared channel to at least one user terminal of said group of the at least one user terminal for data transmission from and to a base station.

The object of the invention is furthermore achieved by a base station for allocating radio resources in a multi-carrier transmission system, wherein said base station is adapted to
- preallocate radio resources to at least one shared channel,
- assign a group of at least one user terminal to said at least one shared channel,
- transmit information defining said at least one shared channel to the group of the at least one user terminal,
- and use dynamic scheduling for allocating radio resources of said at least one shared channel to at least one user terminal of said group of the at least one user terminal for data transmission from and to the base station.

The object of the invention is furthermore achieved by a user terminal for communication with a base station in a multi-carrier transmission system, wherein said user terminal is adapted to
- receive information indicating an assignment of the user terminal to at least one preallocated shared channel,
- receive information defining said at least one preallocated shared channel,
- and receive dynamic scheduling information for allocating radio resources of said at least one preallocated shared channel to the user terminal for data transmission from and to the base station.

The invention is described in the following within the framework of 3GPP LTE, however as the invention is not restricted to 3GPP LTE or enhancements thereof, but can in principle be applied in other networks that use scheduling principles based on selecting an appropriate number of allocations, and control channel dimensioning, like e.g. in WiMAX networks (WiMAX = Worldwide Interoperability for Microwave Access), in the following, instead of the term eNodeB used in LTE, the more general term base station is used. Furthermore, the term user terminal shall represent all forms of terminal devices, as e.g. smart phones, tablets, or sensors for sensor networks, which might transmit and receive data with or without the interaction of a human being and other fixed installed or mobile communication devices able to transmit and receive data.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows preallocated radio resources as a function of time.
Fig. 4 schematically shows preallocated radio resources with signal to noise ratio dependent resource mapping.
Fig. 5 schematically shows preallocated radio resources comprising a format indicator.
Fig. 6 schematically shows preallocated radio resources with a separate format indicator channel.
Fig. 7 schematically shows preallocated radio resources with different formatting.
Fig. 8 schematically shows a sequence chart for allocating radio resources according to an embodiment of the invention.

### Description of the embodiments

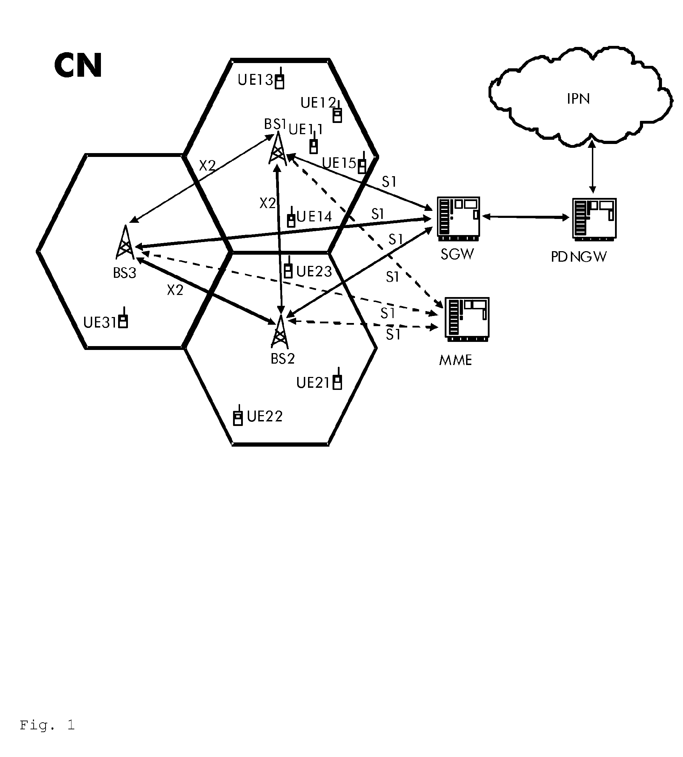

Fig. 1 shows as an example of a communication network in which the invention can be implemented a communication network CN according to the standard 3GPP LTE.

Said communication network CN comprises base stations BS1-BS3, user terminals UE11-UE31, a serving gateway SGW, a packet data network gateway PDNGW, and a mobility management entity MME.

The user terminals UE11-UE15 are connected via radio connections to the base station BS1, the user terminals UE21-UE23 are connected via radio connections to the base station BS2, and the user terminal UE31 is connected via a radio connection to the base station BS3. In future evolutions of LTE, each of the user terminals UE11-UE31 can also be connected via radio connections to multiple of said base stations BS1-BS3.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signaling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1-BS3.

The mobility management entity MME performs tasks of the subscriber management and the session management, and also performs the mobility management during handover between different access networks.

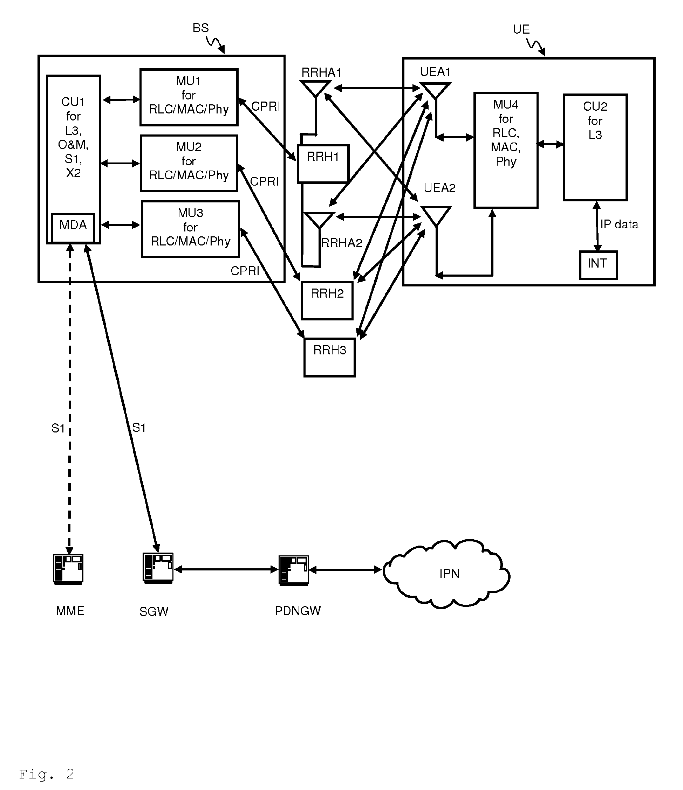

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

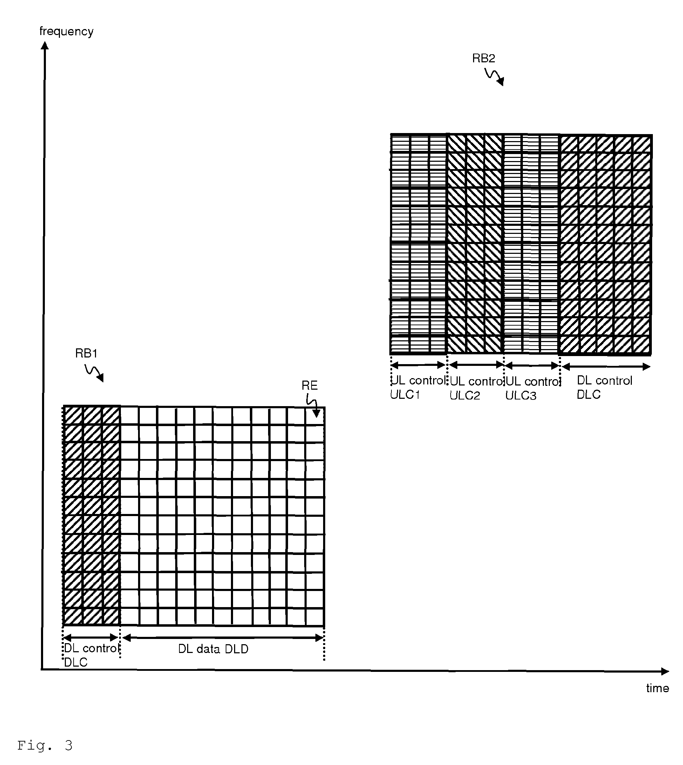

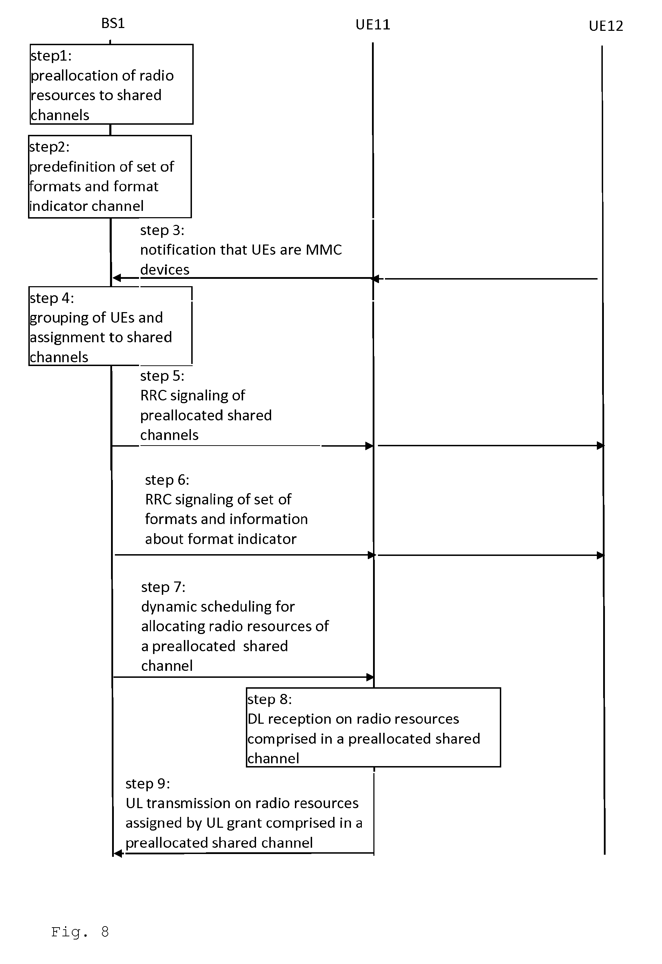

In the sequel, first in figs. 3-7 and the respective description, different embodiments of preallocated radio resources and different embodiments for indication of a format of the preallocated radio resources is disclosed, and then in fig. 8, an example of a sequence chart for allocating radio resources according to an embodiment of the invention is disclosed.

Fig. 3 shows two physical resource blocks RB1 and RB2 consisting of resource elements RE in a time-frequency grid. Said two physical resource blocks RB1 and RB2 shall represent radio resources which are preallocated to at least one shared channel according to embodiments of the invention. The two physical resource blocks RB1 and RB2 each comprise by way of example 14 OFDM symbols in time dimension, and 12 subcarriers in frequency dimension. Concerning the physical resource block RB1, the first three OFDM symbols carry downlink control information DLC, and the remaining 11 OFDM symbols carry respective user data DLD. A preallocated shared channel may comprise radio resources from multiple physical resource blocks.

According to LTE Release 8, user terminals receive control information in first physical resource blocks for control information and receive user data in second physical resource blocks for user data information, the first and second physical resource blocks being widely separated in time and frequency dimensions. Using said first and second physical resource blocks, the control information dedicated to a single user terminal is spread in multiple first physical resource blocks for control information over a significant part of the radio resources dedicated to communication with such user terminals.

In contrast, according to the concept depicted in the physical resource block RB1 of fig. 3, all or at least most of the control information DLC dedicated to a single user terminal is transmitted together with the data information DLD dedicated to said user terminal in one or few physical resource blocks.

Thus, the control information for a user terminal is not spread over the whole radio resources and decoding control information dedicated to a certain user terminal does not require scanning the whole radio resources by said user terminal.

The radio resources for machine to machine communication (MMC) are preallocated, thus the MMC devices are aware which radio resources are candidates for actual transmission/reception. The actual usage of radio resources for transmission is scheduled dynamically by means of scheduling grants as described above. The scheduling grants enable to select the user, typically by user-specific Cyclic Redundancy Check (CRC), to perform link adaptation by adaptive modulation and coding, to perform retransmissions, etc.. The needed control information for setting up a downlink or uplink connection between the base station BS and the user terminal UE is thus reduced as part of said control information is already known according to the preallocation. As a result, remaining control information requirements are reduced and physical resource blocks for control information and physical resource blocks for user data information are combined to one physical resource block, as e.g. the physical resource block RB1 in fig. 3, according to embodiments of the invention, which is especially advantageous in case of transmission of low data requirements as it is the case in machine to machine communication (MMC). In other words, a control channel including user-specific addressing, typically by means of user-specific CRC, is embedded into the time-frequency resources used for actual data transmission. Thus, no resource allocation information is needed in the Downlink Control Information (DCI).

In an embodiment according to the concept depicted in the preallocated physical resource block RB2 of fig. 3, the physical resource block RB2 carries control information only, e.g. UL scheduling grants and some DL control commands, e.g. used to instruct MMC devices to carry out some special actions, as e.g. update of system information etc.. An MMC device, i.e. user terminal, has received information to use the preallocated DL radio resources comprised in the physical resource block RB2. Thus, the user terminal will then search for DL scheduling grants and other DL control information and for UL scheduling grants within the preallocated radio resources in the physical resource block RB2, e.g. by perfoming blind searches involving a number of user-specific CRCs. The possible locations of DL or UL control information withing the preallocated resoucrces may be predefined or signaled to MMC devices. The size of the control signaling fields may be fixed or chosen from a set of possible sizes, e.g. to enable multiple code rates on the control channel.

The preallocated resource block RB2 comprises by way of example uplink control information ULC1-ULC3 belonging to three different user terminals, and one downlink control information DLC comprising DL control commands as mentioned above. It shall be noted that such uplink or downlink control information may address a dedicated single user terminal, a subset of user terminals or the full set of user terminals among the group of user terminals being assigned to use the preallocated radio resources.

An UL scheduling grant transmitted on a preallocated DL radio resource, as e.g. in the uplink control information ULC1-ULC3 in the preallocated physical resource block RB2, shall define the UL radio resource to be used for the UL data transmission of the MMC device, either using an implicit definition or using very restricted signaling, as e.g. an identifier for a preallocated UL radio resource. If the MMC device finds an UL scheduling grant on a preallocated DL radio resource, this could implicitly define the location of the UL radio resource to be used for UL data transmission, e.g. if DL resource uses a physical resource block (PRB) #25 for scheduling an UL scheduling grant, the UL resource could use PRB #25 or PRB #25 + offset, with the offset being signaled or predefined. Alternatively a number of preallocated UL channels could be defined for the MMC device, e.g. four UL channels 0...3, and the UL scheduling grant on a preallocated DL resource could carry a 2bit UL channel identifier.

In the examples for preallocated physical resource blocks RB1 and RB2 depicted in fig. 3, data and control information DLC and DLD in RB1 are separated by TDM, different control channels ULC1-ULC3 and DLC in RB2 are separated by TDM, and different control channels ULC1-ULC3 and DLC in RB2 have about equal size. In general, the sizes of different control channels may be different, e.g. DL and UL control channels may have different sizes, or a control channel may have variable size due to adaptive coding. TDM multiplexing is used in the examples above, but also other multiplexing techniques such as FDM, code division multiplexing (CDM) or space division multiplexing (SDM), or combinations of those techniques may be applied.

In addition, in one embodiment, a machine to machine communication control channel is provided to handle multiple machine to machine communication data channels. As control information needed in the control channel is significantly reduced by the method described above, the control information to be transmitted on the machine to machine communication control channel is reduced, and a simple machine to machine communication data channel identifier could be included into the downlink control information, e.g. two bits for four channels. In total there is a significant lower control overhead compared to full resource allocation as in LTE.

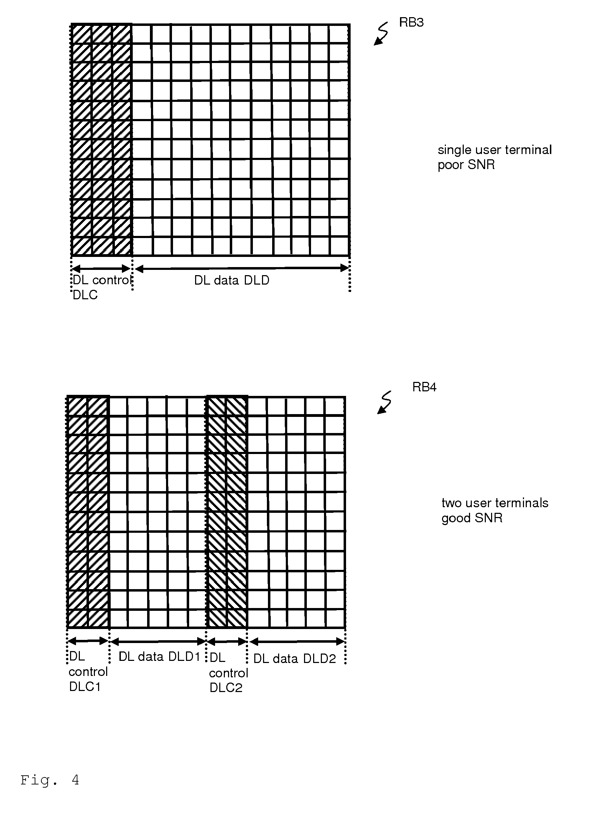

Fig. 4 schematically shows preallocated radio resources with signal to noise ratio (SNR) dependent resource mapping.

In the upper part of fig. 4, an example of an SNR-dependent resource mapping of a preallocated DL radio resource in a physical resource block RB3 used for data and control of a single MMC device having unfavorable channel conditions, i.e. low SNR, is shown. The resource allocation corresponds to the resource allocation of the physical resource block RB1 depicted in fig. 3, i.e. the first three OFDM symbols carry downlink control information DLC, and the remaining 11 OFDM symbols carry respective user data DLD.

In the lower part of fig. 4, an example of an SNR-dependent resource mapping of a preallocated DL radio resource in a physical resource block RB4 used for data and control of two MMC devices having good channel conditions, i.e. high SNR, is shown. In this case, data and control can be transmitted less robustly, with higher code rate and modulation order, thus consuming less radio resources. Thus, only two OFDM symbols are used for a respective downlink control information DLC1 and DLC2 for each of the two MMC devices instead of three OFDM symbols in the physical resource block RB3. 5 OFDM symbols carry respective user data DLD1 and DLD2 for each of the two MMC devices.

An alternative embodiment for dealing with preallocation at different SNR is to define multiple preallocations with different sizes of preallocated radio resources. A user terminal may be mapped to a first preallocation having small size if it experiences a good SNR, and to a second preallocation having larger size if it experiences poor SNR.

The simplest embodiment is to dimension a preallocation for worst-case SNR and using it irrespective of actual SNR of the user terminal, however this is related to quite high utilization of radio resources.

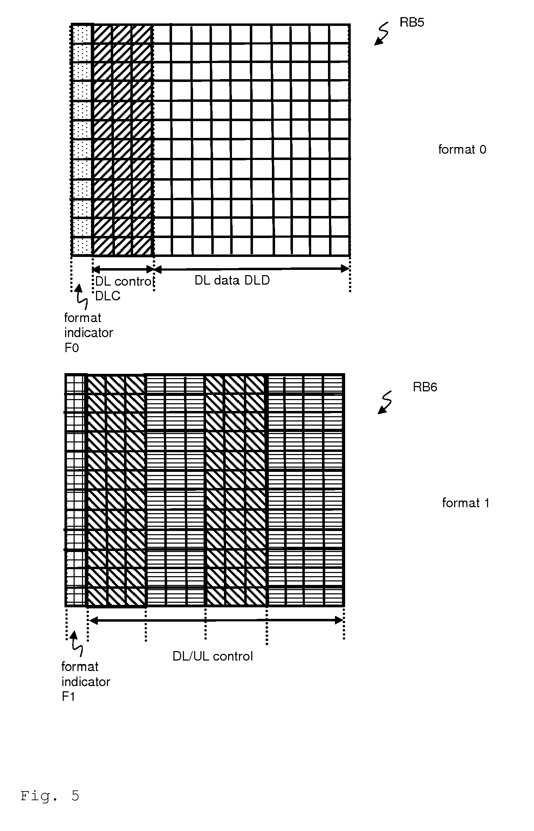

Fig. 5 schematically shows preallocated radio resources in two physical resource blocks RB5 and RB6 each comprising a format indicator F0 and F1 respectively, i.e. fig. 5 illustrates that a preallocated DL radio resource could further carry a format indicator field.

In the upper part of fig. 5, the preallocated physical resource block RB5 carries in the first OFDM symbol a format indicator F0 which indicates that the preallocated physical resource block RB5 carries DL control information DLC and downlink data DLD.

In the lower part of fig. 5, the preallocated physical resource block RB6 carries in the first OFDM symbol a format indicator F1 which indicates that the preallocated physical resource block RB6 carries DL/UL control information only.

The use of a format indicator helps to reduce power consumption of the MMC device by reducing the number of blind searches. The format indicator could be transmitted with a pre-defined or configured mapping, as e.g. TDM, and modulation and coding scheme.

In the simplest form the format indicators F0 and F1 could carry n bits to differentiate formats 0, 1 ... 2ⁿ-1, with robust modulation and coding, as e.g. 12x repetition and Binary Phase Shift Keying (BPSK) modulation.

The format indicator can also include information about the size of control information or a modulation and coding scheme used for transmission of control information, or information about the number of user data transmitted, preferably by indicating a format from a predefined set.

In principle, a format indicator can also be transmitted using DL radio resources other than the preallocated radio resources. Also format indicators for multiple preallocated resources, i.e. MMC channels, can be encoded together, and format indicators can be transmitted on a common control channel.

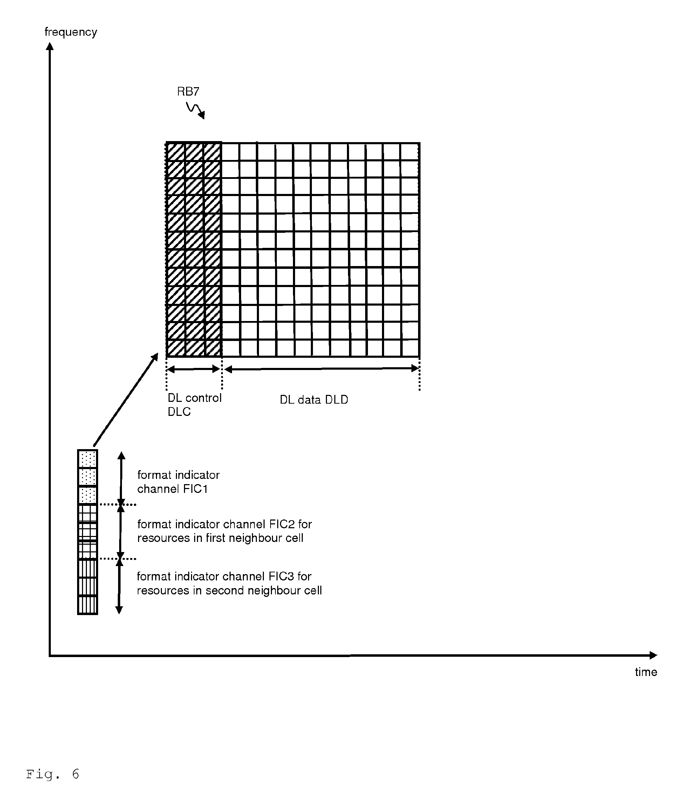

Fig. 6 schematically shows preallocated radio resources with such a separate format indicator channel.

Fig. 6 exemplarily depicts dedicated format indicator channels FIC1-FIC3 of three neighbor cells, each comprising a format indicator indicating a format which is used for respective preallocated radio resources.

The format indicator channel FIC1 e.g. indicates a format which is used for the preallocated physical resource block RB7, and possibly also a location of the preallocated physical resource block RB7.

The format indicator comprised in the format indicator channel FIC1 e.g. indicates, whether the preallocated radio resource for MMC is actually used for carrying MMC data or not. In the latter case, the resource may be idle or may be used to carry other type of traffic such as broadband data. If MMC traffic is carried on the preallocated resource, the format indicator may indicate the format of the preallocated resource. In the example depicted in fig. 6, the format indicator can e.g. indicate, that the preallocated physical resource block RB7 consists of 3 OFDM symbols used for DL control information DLC followed by 11 OFDM symbols used for DL data DLD.

The decoding of the format indicator can preferably be implemented with very low computational complexity, e.g. a simple robust repetition code w/o CRC.

Such a structure helps to reduce the number of blind searches performed by the MMC device and thus helps to reduce energy consumption of the device.

The format indicator channel can further be implemented in order to provide robustness against neighbor-cell interference, e.g. neighboring cells use orthogonal radio resources for their format indicators FIC1-FIC3, as e.g. FDM as shown in Fig. 6.

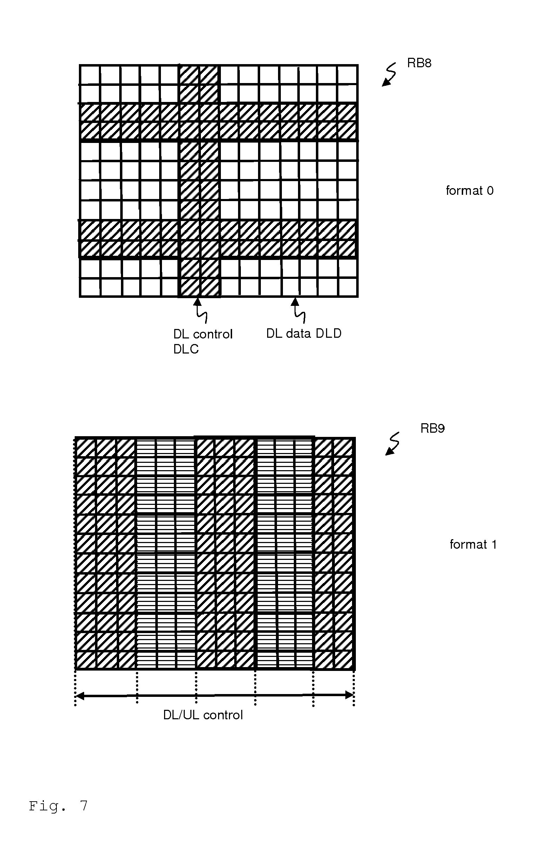

Fig. 7 schematically shows preallocated radio resources with different formatting. As shown in Fig. 7, different formats of preallocated resources could also be allocated quite differently. A format indicator may be included in the preallocated radio resources or not, as e.g. depicted in fig. 5 and fig. 6 respectively.

In the upper part of fig. 7, a preallocated physical resource block RB8 according to format 0 carries DL control information DLC which is mixed with DL data DLD, i.e. control information and user data comprised in said physical resource block RB8 are transmitted alternating in time or frequency, thus allowing a usage of the control information DLC as pilot signals for DL data DLD if CRC is passed. This way, regular pilot symbols for DL data detection, i.e. the second set of pilot symbols, are omitted or their number reduced and thus the structure of a physical resource block according to the invention is advantageous with regard to machine to machine communication. The pilot overhead is reduced and the channel estimation accuracy for the actual data detection is improved. As the radio resources are preallocated, precoded pilots may be used exclusively.

In the lower part of fig. 7, a preallocated physical resource block RB9 according to format 1 carries DL/UL control information only. In contrast to the DL control information DLC which is mixed with DL data DLD according to format 0 in the preallocated physical resource block RB8, the different control channels according to format 1 in the preallocated physical resource block RB9 are time division multiplexed.

Fig. 8 schematically shows a sequence chart for allocating radio resources according to an embodiment of the invention for communication between a base station BS1 and two user terminals UE11 and UE12, as e.g. depicted in fig. 1.

In step 1, the base station BS1 preallocates radio resources to preallocated shared channels. The transmission system, e.g. an OFDM, SC-FDMA, FBMC, etc. system provides multiple transmission channels. The channels provide data transmission capability, which is scheduled during time. In a simple example, the channels used for machine to machine communication (MMC) may be defined in the frequency domain by a set of subcarriers, e.g. a single resource block or a few subcarriers. This set of subcarriers, as e.g. the physical resource blocks RB1-RB9 in figs. 3-7, is preallocated to machine to machine communication (MMC).

In one embodiment, preallocation of at least one of multiple preallocated shared channels depends on system bandwidth, frame format, subframe format, prefix format and/or network load.

In one embodiment, the information for preallocation of at least one shared channel is broadcast. This may be done when initializing the system or on a regular basis.

In step 2, the base station BS1 predefines a set of formats and format indicator channels as depicted in figs. 5 and 6 and described above. Preferably, a format is indicated by a format indicator out of a predefined set of format indicators. A format indicator can include or indicate information about a usage of at least one preallocated shared channel, as e.g. information whether the preallocated radio resources are dynamically scheduled or not for MMC, or as e.g. information whether control and user data, or only control data are transmitted, a size of control information comprised in said at least one preallocated shared channel, a modulation and coding scheme used for transmission of control information over said at least one preallocated shared channel, or a number of user data comprised in said at least one preallocated shared channel.

In an alternative of the embodiment, the format indicator is transmitted over the at least one preallocated shared channel, as depicted in fig. 5 and described above.

In a further alternative of the embodiment, the format indicator is transmitted over a separate channel, as depicted in fig. 6 and described above.

In a yet further alternative of the embodiment, the information of the format indicator is transmitted with a predefined or preconfigured location, or a predefined or preconfigured modulation and coding scheme, as e.g. described above under fig. 5.

However, according to further embodiments, it is not needed to use format indicators. Instead, the information indicated by or included in a format indicator can be included in control information and/or be determined by blind searches.

In step 3, the user terminals UE11 and UE12 notify the base station BS1 that the user terminals UE11 and UE12 are MMC devices.

In step 4, the user terminals UE11 and UE12, which are MMC devices, are assigned to groups of at least one user terminal. According to an embodiment, the user terminals belonging to a group of at least one user terminal are defined by information of an identifier of the user terminal. As an example, a Radio Network Temporary Identifier (RNTI) is used for defining a group of at least one user terminal. Using an identifier of the user terminal for grouping the user terminals has the advantage that the identifiers are known anyway, and thus no additional information has to be requested and is needed to build the groups of user terminals. As this information is available at the user terminals anyway, they can group themselves without additional overhead.

In one embodiment, the definition of groups of user terminals depends on quality of service (QoS) requirements of the respective user terminals. This has the effect that user terminals having the same or similar quality of service requirements are grouped. The user terminals UE11 and UE12 shall have similar quality of service requirements and are thus assigned to one group.

As a consequence, at least one preallocated shared channel is assigned to a group of at least one user terminal having the same or similar quality of service requirements.

Thus, the dynamic scheduling and the parameters for data transmission may be adapted in a way to meet this quality of service requirements best while at the same time ensuring efficient use of the radio resources.

In one embodiment, different shared channels are available for different quality of service requirements. The user terminals are assigned to an appropriate preallocated shared channel by being grouped according to their quality of service requirements. A user terminal may assign itself to a group of at least one user terminal according to its quality of service requirements. If a user terminal is e.g. a temperature, light or other sensor, the user terminal itself is aware of its quality of service requirements needed for submitting and/or receiving sensor data. If a user terminal is e.g. a phone, the device itself is aware of the quality of service requirements for transmitting and/or receiving voice data. Thus the devices are able to group themselves independently.

In one embodiment, preallocation of at least one of multiple shared channel depends on system bandwidth, frame format, subframe format, prefix format and/or network load. Thus, related requirements with regard to data transmission of the user terminals are a basis for assigning user terminals to the respective preallocated shared channels and building the groups of user terminals. Thus, assignment of the user terminals to the corresponding preallocated shared channels depends directly or indirectly on the above mentioned criteria. The criteria may be broadcast when initializing the radio cell, broadcast on a regular basis or the criteria may also be known in advance by the user terminals UE11 and UE12. Alternatively, the criteria may be communicated by user specific signaling.

If e.g. N=4 machine to machine communication (MMC) preallocated shared channels are defined, each channel being characterized by a frequency range, e.g. the n=2 least significant bits of the user terminal ID, e.g. RNTI, may be used for shared channel assignment. The user terminals with IDs xx...x00 share channel #0, the user terminals with IDs xx...x01 share channel #1, and so on. Allocation parameters related with a preallocated shared channel, such as the number N, the frequency offset, the frequency width of the shared channels corresponding to the number of subcarriers per shared channel, the frequency spacing of the shared channels, the frequency repetition factor of the shared channels for two or more allocations in the same transmission time interval (TTI), time duration and time spacing may be predefined, signaled via cell broadcast, or signaled user-specifically.

In one embodiment, in addition, frequency hopping patterns are defined according to a predefined permutation function, in order to benefit from a frequency diversity gain. Shared channels are allocated in time according to the transmission time interval (TTI). Alternatively, other time spacing may be used for allocating shared channels to user terminals. Sparsity in the time domain reduces battery consumption of the user terminals as it reduces blind searches and allows switching off part of the baseband functionalities, e.g. discontinuous reception (DRX).

The resource assignment may have different extends from a very large number of user terminals assigned to one preallocated shared channel to the case that a preallocated shared channel may be assigned to a single user terminal. The frequency assignment may be at the center of the carrier, or be on the same carrier with some frequency offset from the center of the carrier, or be on another component carrier. Data transmission in the assignments is realized via transmission of physical resource blocks carrying control information and data information, as depicted in Fig. 3 and described above.

In step 5, the base station BS1 transmits information to the user terminals UE11 and UE12 via user-specific signaling, as e.g. Radio Resource Control (RRC) signaling, about at least one preallocated shared channel for uplink and/or downlink transmission to which the user terminals UE11 and UE12 have been assigned, as e.g. information about a location of said at least one preallocated shared channel in a time-frequency grid, i.e. the used resource elements or resource blocks.

In step 6, the base station BS1 transmits information about a set of formats, as e.g. depicted in figs. 5 and 6 and described above, to the user terminals UE11 and UE12 via user-specific signaling, as e.g. Radio Resource Control (RRC) signaling. The set of formats include e.g. information about the size of control information or a modulation and coding scheme used for transmission of control information, or information about the number of user data transmitted.

Preferably, the base station BS1 also transmits information about resources used for transmission of a format indicator, as e.g. the first OFDM symbol in the resource blocks RB5 and RB6 in fig. 5, to the user terminals UE11 and UE12. In one embodiment, the base station BS1 transmits information about a format indicator, as e.g. depicted in figs. 5 and 6 and described above, to the user terminals UE11 and UE12 via user-specific signaling, as e.g. Radio Resource Control (RRC) signaling. Said information about the format indicator could be transmitted with a pre-defined or configured mapping, as e.g. TDM, and modulation and coding scheme.

Thus, the user terminals UE11 and UE12 are notified by the base station BS1 about the set of formats, and which format indicator indicates which format.

In the simplest form the format indicators could carry n bits to differentiate formats 0, 1 ... 2ⁿ-1, with robust modulation and coding, as e.g. 12x repetition and Binary Phase Shift Keying (BPSK) modulation.

In one embodiment, a format indicator can also be transmitted using DL radio resources other than the preallocated radio resources, as e.g. the format indicator channel FIC1 in fig. 6. Then, preferably, the base station BS1 also transmits information about resources used for the format indicator channel to the user terminals UE11 and UE12.

In step 7, assuming that the user terminal UE11 has data to be exchanged with the base station BS1, a preallocated shared channel is assigned to the user terminal UE11 by dynamic scheduling. For example, in case of an LTE network, access is granted on Physical Downlink Control Channel/ Physical Downlink Shared Channel (PDCCH/PDSCH) or Physical Downlink Control Channel/Physical Uplink Shared Channel (PDCCH/PUSCH). This may be done with reduced scheduling grant (DCI) size, as the preallocation of a shared channel leads to reduced efforts during assignment of scheduling grants. Also other parameters like modulation and coding schemes, redundancy version (RV) parameters, HARQ IDs may be constrained and the size of CRC/RNTI may be reduced at the expense of somewhat reduced performance/flexibility. The search space may also be constrained for battery saving purposes. The preallocation restricts the search space on the control channel as the preallocation defines time-frequency resources on which the user terminal UE11 transmits and/or receives control information and data.

In one embodiment, to further reduce battery consumption, DRX/paging cycle is used. Thus, the communication means of the user terminal UE11 are switched off according to a predefined pattern.

In another embodiment, for contention-based access, a separate control channel, e.g. positioned in the inner xMHz bandwidth, is provided comprising an uplink scheduling grant e.g. defining an UL MCS for realizing a random access procedure for dynamic scheduling within uplink resources preallocated to a group of at least one user terminal. A user terminal of said group of at least one user terminal which has data to be sent in uplink can use said uplink resources, i.e. can have contention based access in UL at any time.

In one embodiment, in case the preallocated shared channels are not fully occupied by the transmissions of the machine to machine communication devices, the shared channel may in addition be dynamically allocated to broadband or other applications by the dynamic scheduling algorithm and thus carry data which do not originate from machine to machine communication services. This improves the spectral efficiency on the air interface, especially when the machine to machine communication traffic does not fully occupy the preallocated shared channels. The system is kept efficient irrespective of the ratio between machine to machine communication traffic and other traffic like broadcast or voice.

In step 8, the user terminal UE11 receives control information and/or user data comprised in a preallocated shared channel which has been dynamically scheduled to the user terminal UE11 in step 7.

In step 9, assuming that the user terminal UE11 has received an UL grant in step 8, the user terminal UE11 transmits in uplink to the base station BS1 on radio resources which have been assigned by an UL grant in the preallocated shared channel to the user terminal UE11.

In the embodiments described above and depicted e.g. in figs. 3-8, the corresponding processing steps can be performed e.g. in the modem unit boards MU1-MU4 and the control unit board CU1, CU2 of the base station BS and the user terminal UE respectively as depicted in fig. 2 and described above.

## Claims

1. A method for allocating radio resources in a multi-carrier transmission system, wherein
• radio resources (RB1-RB9) are preallocated to at least one shared channel,
• a group of at least one user terminal (UE11, UE12) is assigned to said at least one shared channel,
• information defining said at least one shared channel is transmitted to the group of the at least one user terminal (UE11, UE12),
• and dynamic scheduling is used for allocating radio resources (RB1-RB9) of said at least one shared channel to at least one user terminal of said group of the at least one user terminal (UE11, UE12) for data transmission from and to a base station (BS1).

2. A method according to claim 1, wherein information indicating at least one of a group of a usage of said at least one shared channel, whether radio resources (RB1-RB9) of said at least one shared channel are dynamically scheduled to the at least one user terminal of said group of the at least one user terminal (UE11, UE12), a size of control information (DLC, DLC1, DLC2, ULC1-ULC3) comprised in said at least one shared channel, a modulation and coding scheme used for transmission of control information over said at least one shared channel, and a number of user data (DLD, DLD1, DLD2) comprised in said at least one shared channel is transmitted to the at least one user terminal of said group of the at least one user terminal (UE11, UE12).

3. A method according to claim 2, wherein said information is transmitted over said at least one shared channel.

4. A method according to claim 2, wherein said information is transmitted over a separate channel (FIC1).

5. A method according to claim 3 or 4, wherein said information is transmitted with at least one of a group of a predefined or preconfigured location, and a predefined or a preconfigured modulation and coding scheme.

6. A method according to any of the claims 2 to 5, wherein a format indicator (F0, F1) indicating a predefined set of formats is used for transmission of said information.

7. A method according to any of the preceding claims, wherein information about a location of control information within the at least one shared channel is predefined and known by the at least one user terminal of said group of the at least one user terminal (UE11, UE12), or transmitted to the at least one user terminal of said group of the at least one user terminal (UE11, UE12).

8. A method according to any of the preceding claims, wherein the number of user terminals of said group of the at least one user terminal (UE11, UE12) which are dynamically scheduled to the at least one shared channel is dependent on the channel conditions of user terminals of the group of the at least one user terminal (UE11, UE12).

9. A method according to any of the preceding claims, wherein
• different amounts of radio resources are preallocated to different shared channels,
• and the group of the at least one user terminal (UE11, UE12) is assigned to the at least one shared channel dependent on the channel condition of the at least one user terminal (UE11, UE12), and dependent on the amount of radio resources which is preallocated to the at least one shared channel.

10. A method according to claim 9, wherein different groups of at least one user terminal are defined dependent on channel conditions of user terminals.

11. A method according to any of the preceding claims, wherein control information (DLC) and user data (DLD) comprised in said at least one shared channel (RB8) are transmitted alternating in time or frequency allowing a usage of the control information as pilot signals.

12. A method according to any of the preceding claims, wherein said radio resources (RB1-RB9) which are preallocated to at least one shared channel are grouped in at least one resource block comprising control information and user data (RB1, RB3-RB5, RB7-RB8) or only control information (RB2, RB6, RB9).

13. A method according to any of the preceding claims, wherein said radio resources (RB1-RB9) are preallocated to the at least one shared channel for machine to machine communication.

14. A method according to claim 13, wherein resources from the at least one shared channel are dynamically scheduled to other applications than machine to machine communication in case the at least one shared channel is not fully occupied with machine to machine communication data.

15. A method according to any of the preceding claims, wherein said at least one shared channel comprises at least one uplink scheduling grant using implicit or explicit signaling of radio resources which have to be used for uplink data transmission.

16. A base station (BS1) for allocating radio resources in a multi-carrier transmission system, wherein said base station (BS1) is adapted to
• preallocate radio resources (RB1-RB9) to at least one shared channel,
• assign a group of at least one user terminal (UE11, UE12) to said at least one shared channel,
• transmit information defining said at least one shared channel to the group of the at least one user terminal (UE11, UE12),
• and use dynamic scheduling for allocating radio resources (RB1-RB9) of said at least one shared channel to at least one user terminal of said group of the at least one user terminal (UE11, UE12) for data transmission from and to the base station (BS1).

17. A user terminal (UE11) for communication with a base station (BS1) in a multi-carrier transmission system, wherein said user terminal (UE11) is adapted to
• receive information indicating an assignment of the user terminal (UE11) to at least one preallocated shared channel,
• receive information defining said at least one preallocated shared channel,
• and receive dynamic scheduling information for allocating radio resources (RB1-RB9) of said at least one preallocated shared channel to the user terminal (UE11) for data transmission from and to the base station (BS1).
